# EUROPÄISCHE PATENTANMELDUNG

(11) **EP 3 104 257 A2**
(43) Veröffentlichungstag der Anmeldung: **14.12.2016**
(21) Anmeldenummer: 16173326.6
(22) Anmeldetag: 07.06.2016
(51) Int. Cl.: G06F 3/01, G06F 1/16, H04N 5/232

(54) **VERFAHREN UND SYSTEM ZUR LAGEERMITTLUNG UND EINSATZDOKUMENTATION BEI GEFAHRGUTEINSÄTZEN**

(30) Priorität: 07.06.2015 DE 102015108933
(71) Anmelder: BOS Connect GmbH, 73525 Schwäbisch Gmünd (DE)
(72) Erfinder: Bollin, Sascha, 73525 Schwäbisch Gmünd (DE); Nicklas, Gero, 73525 Schwäbisch Gmünd (DE); Stäbler, Julia, 73525 Schwäbisch Gmünd (DE)
(74) Vertreter: Patentanwälte und Rechtsanwalt Weiß, Arat & Partner mbB

(57) **Zusammenfassung**

Eine Vorrichtung zur Lagefeststellung bei Gefahrguteinsätzen soll zumindest umfassen:
-ein Gehäuse,
-eine Vorrichtung zur Gestenerkennung,
-eine Bildaufnahmevorrichtung, wobei die vorzugsweise ein Smartphone oder eine Digitalkamera ist.
-ein Funkelement,
-eine Steuerung, wobei die Steuerung zumindest für die Kopplung der Gestenerkennung mit der Bildaufnahmevorrichtung und für eine Übertragung von Bildern und/oder Bildsequenzen an eine Datenbank nutzbar ist.

## Beschreibung

### Technisches Gebiet

Die Erfindung betrifft ein System zur Lagefeststellung bei Gefahrguteinsätzen nach dem Oberbegriff des Anspruchs 1 und ein Verfahren zur Erzeugung von Daten, Bildern und/oder Bildsequenzen bei Gefahrguteinsätzen nach dem Anspruch 12.

### Stand der Technik

Bei Gefahrguteinsätzen sind die zur Gefahrenabwehr eingesetzten Rettungskräfte im Regelfall zunächst mit einer unklaren Lage an der Unglücksstelle konfrontiert. Insbesondere ist den Rettungskräften und deren Einsatzleitung zu Beginn meist nicht bekannt welche Gefahren, insbesondere welche Gefahrstoffe an der Einsatzstelle vorliegen. Auch ist meist nicht bekannt ob die Gefahrenzone um die Einsatzstelle eine explosionsgefährdete Zone darstellt. Dabei ist für die Einsatzleitung beispielsweise wichtig, ob Gefahrstoffe freigesetzt wurden bzw. ob eine Freisetzung droht, wie gross die freigesetzte Menge an Gefahrstoffen ist, welche Gefahrstoffe an der Einsatz-/Unglücksstelle vorhanden sind, ob einzelne Stoffe gefährlich reagieren können, ob explosive Stoffe vorhanden sind und in was für einer Art Behältnis die Gefahrstoffe gelagert sind.

Aufgrund der zu Beginn im Regelfall unbekannten Lage werden durch verschiedene Vorschriften gewisse Schutzzonen vorgegeben, die bei möglichen Gefahrguteinsätzen vorsorglich eingehalten werden müssen. Um diese Schutzzonen zu erkunden wird im Stand der Technik für die Lageerkundung/Lagefeststellung ein Trupp von Feuerwehrangehörigen genutzt, der mit einer persönlichen Schutzausrüstung ausgerüstet ist, die insbesondere eine umluftunabhängige Atemluftversorgung (Pressluftatmer + Atemschutzmaske) und einem Chemikalienschutzanzug (CSA) umfasst. Dieser CSA-Trupp gibt die aufgefundene Lage an der Unglückstelle über Funk an die Einsatzleitung weiter. Aufgrund der persönlichen Schutzausrüstung kommt es dabei immer wieder zu Missverständnissen, weshalb die Lageerkundung häufig viel Zeit in Anspruch nimmt und zudem fehlerbehaftet sein kann. Weiterhin ist für die Einsatzleitung die Unglücksstelle meist nicht oder nur bedingt einsehbar, wodurch der Aufbau der weiteren Einsatztaktik von den Erläuterungen des erkundenden Trupps und der teils schwer verständlichen per Sprechfunk übermittelten Lage abhängig ist.

Auch bei Wartungs- und/oder Installationsarbeiten in der chemischen bzw. der fossilen Energieträger wie der Erdöl- und Erdgasverarbeitenden Industrie können bei Arbeiten die vorgenommen werden müssen, ähnliche Probleme und Umstände auftreten wie sie bei den zuvor beschriebenen Gefahrguteinsätzen von Rettungsorganisationen auftreten können. Auch kann es zwischen Vorgesetzten und/oder weiteren Experten und den mit den Arbeiten beauftragtem Personal einerseits zu Missverständnissen kommen und es kann dieselbe Problematik bzgl. der Schilderung der vorgefunden Lage auftreten.

### Aufgabe der Erfindung

Aufgabe der Erfindung ist es, die Lagefeststellung bei einem Gefahrguteinsatz oder in einem industriellen Gefahrenbereich zu verbessern und zu erleichtern. Insbesondere ist es dabei Aufgabe der Erfindung eine einfach zu bedienende Vorrichtung für die Lagefeststellung zur Verfügung zu stellen. Weiterhin ist es Aufgabe der Erfindung, dass die Lagefeststellung auf möglichst einfache Weise durchführbar ist und dabei möglichst detaillierte Informationen erzeugt/liefert. Auch eine vorzugsweise zeitnahe Übermittlung der festgestellten Lage aus der Schutzzone hinaus ist durch die Aufgabe der Erfindung umfasst.

### Lösung der Aufgabe

Zur Lösung der Aufgabe führen die Merkmale des Systems nach dem Anspruch 1 sowie des Verfahrens nach dem Anspruch 10. Vorteilhafte Ausgestaltungen sind in den Unteransprüchen beschrieben.

Ein erfindungsgemässes System zur Lagefeststellung bei Gefahrguteinsätzen wird in einem typischen Ausführungsbeispiel von einem Erkundungstrupp in einen Gefahrenbereich zu einer Unglücksstelle vorgenommen um die dortige Lage für eine Einsatzleitung von Rettungskräften, insbesondere für die Einsatzleitung und einen Einsatzleiter der Feuerwehr, zu erkunden. In weiteren Ausführungsbeispielen kann das erfindungsgemässe System auch von einer einzelnen Person genutzt und bedient werden.

Das System umfasst in einem typischen Ausführungsbeispiel eine Bildaufnahmevorrichtung, die vorzugsweise in einem Gehäuse untergebracht ist, das einen Einsatz der Bildaufnahmevorrichtung in einem explosionsgefährdeten Bereich der Zone 0 (Ex-0) bei Gasen oder der Zone 20 bei Stäuben ermöglicht.

Vorzugsweise weist die Kombination des Gehäuses mit der Bildaufnahmevorrichtung oder das Gehäuse als solches eine Ex-0- oder Ex-20-Zertifizierung auf. Bei der Bildaufnahmevorrichtung handelt es sich in einem Ausführungsbeispiel um ein Smartphone oder eine Digitalkamera. Bei dem Smartphone handelt es sich in einem typischen Ausführungsbeispiel um ein Smartphone, das aus dem Stand der Technik bekannt ist. Die Bildaufnahmevorrichtung kann weiterhin aus verschiedenen Einzelkomponenten bestehen die eine Aufnahme von Bild- und gegebenenfalls Tondaten ermöglichen. Hierbei kommen verschiedene Systeme in Betracht, die aus dem Stand der Technik bekannt sind.

In einem weiteren Ausführungsbeispiel umfasst das System zudem eine Sensorvorrichtung zur Erfassung weiterer Messwerte. Die Sensorvorrichtung ist dabei in einem Ausführungsbeispiel in der Bildaufnahmevorrichtung integriert und in einem weiteren Ausführungsbeispiel in und/oder an dem Gehäuse. Auch ein Ausführungsbeispiel des Systems ohne eine Bildaufnahmevorrichtung oder der Einsatz des Systems ohne die Bildaufnahmevorrichtung und lediglich mit einer Sensorvorrichtung soll durch die vorliegende Erfindung umfasst sein. Bei den weiteren Sensorvorrichtungen kann es sich beispielsweise um einen UEG-Warner zur Anzeige explosionsfähiger Gas-Luftgemische, verschiedenste Gaswarner, bspw. Kohlenmonoxid-Warner oder weitere aus dem Stand der Technik bekannte für den Einsatz in Gefahrenbereichen vorteilhafte Sensorvorrichtungen handeln. Die Sensorvorrichtung kann bspw. und nicht abschliessend ein Gassensor oder ein Sensor zur Feststellung einer unteren Explosionsgrenze eines Gasgemisches oder einer Staubwolke oder ein Sensor zur Feststellung radioaktiver Strahlung sein.

Weiterhin umfasst das erfindungsgemässe System eine Vorrichtung zur Gestenerkennung oder eine Auslösevorrichtung/einen Auslösemechanismus. In einem Ausführungsbeispiel handelt es bei dem Auslösemechanismus, der auch die Vorrichtung zur Gestenerkennung umfasst, um einen Gestenerkennungssensor, bspw. um ein Gestenerkennungsarmband, das Sensoren zur Erfassung einer vorbestimmten Bewegung und vorzugsweise der damit verbundenen Muskelkontraktion umfasst. Weiterhin kann die Gestenerkennung auch in einer Atemschutzmaske der persönlichen Schutzausrüstung des Erkundungstrupps umfasst sein, wobei die Sensoren zur Gestenerkennung, dabei beispielsweise Muskelkontraktionen bestimmter Gesichtspartien in Signale umwandeln. Bei der Auslösevorrichtung kann es sich weiterhin um Taster, Drucktaster oder weitere Elemente handeln, die vorzugsweise frei positionierbar an der Kleidung oder einer Schutzausrüstung des vorgehenden Erkundungstrupp angebracht werden können. Für die freie Positionierbarkeit kann die Auslösevorrichtung oder die Vorrichtung zur Gestenerkennung vorzugsweise über Funk, bspw. Bluetooth, mit der Bildaufnahmevorrichtung kommunizieren. In weiteren Ausführungsbeispielen kann die Auslösevorrichtung oder die Vorrichtung zur Gestenerkennung auch über ein Kabel mit den weiteren Komponenten des Systems, insbesondere der Bildaufnahmevorrichtung oder einer geeigneten Schnittstelle im Gehäuse für die Bildaufnahmevorrichtung verbunden sein. Bei den Tastern kann es sich bspw. um Taster die ein separates Druckelement als eine Art Schalter aufweisen handeln oder auch um Taster, die lediglich Kontaktelemente umfassen, sodass bspw. eine Berührung an einer Aussenseite, wie etwa an einer Aussenseite eines Rings, dass gewünschte Signal auslöst. Weiterhin kann es sich bei der Auslösevorrichtung und somit auch der Vorrichtung zur Gestenerkennung bspw. auch um einen Dehnungsmesstreifen handeln, der ähnlich einem Gestenerkennungsarmband eine bestimmte Bewegung als Signal erkennen kann.

In Ausführungsbeispielen können neben dem Gehäuse auch die weiteren Bauteile des Systems eine Ex-0- oder Ex-20-Zertifizierung aufweisen. Zudem können das Gehäuse und die Bildaufnahmevorrichtung einstückig ausgebildet sein, d.h. dass die Bildaufnahmevorrichtung selbst eine geeignete Explosionsschutzzertifizierung aufweist. Zudem kann auch die Auslösevorrichtung bzw. die Vorrichtung zur Gestenerkennung einstückig mit der Bildaufnahmevorrichtung oder dem Gehäuse ausgebildet sein bzw. in diese Elemente integriert sein. Auch eine Zertifizierung lediglich für Gefahrenzonen mit einem niedrigeren Gefahrenrisiko (Ex-Zonen 1, 2, 21, 22) ist möglich. Hierbei ist es auch möglich, dass nur einzelne Komponenten wie das Gehäuse eine Ex-0-Zertifizierung aufweisen und die weiteren Komponenten eine Zertifizierung für eine weniger gefährdete Zone oder keine Zertifizierung aufweisen, da die weitern Komponenten bspw. in das Gehäuse oder unterhalb der Schutzausrüstung des Erkundungstrupps ein- bzw. angebracht sind, sodass eine mögliche Gefährdung, die von diesen Bauteilen ausgehen würden, durch die diese Bauteile umschliessenden Komponenten ausgeschlossen/verhindert werden kann.

Das erfindungsgemässe System umfasst weiterhin eine Steuerung. Die Steuerung wird zumindest für die Kopplung der Gestenerkennung mit der Bildaufnahmevorrichtung und für eine Übertragung der durch die Bildaufnahmevorrichtung erzeugten Bilder und/oder Bildsequenzen und/oder weiterer ermittelter Daten an eine Datenbank und/oder ein anderweitiges Empfangsgerät genutzt.

Für die Datenübertragung umfasst das System in einem typischen Ausführungsbeispiel ein Funkelement. Das Funkelement umfasst hierfür in einem Ausführungsbeispiel ein Sende- und Empfangselement zur Übermittlung von Daten via Bluetooth und/oder Wireless-LAN und/oder über ein GSM-Netz. Vorzugsweise wird über das System auch eine Live-Übertragung der durch die Bildaufnahmevorrichtung gewonnenen Bilddaten ermöglicht. Auch eine Live-Übertragung von Tondaten und Messdaten, wie bspw. Messwerte eines UEG-Sensors, verschiedener Gassensoren oder auch Sensoren zur Messung radioaktiver Strahlung oder biologischer Gefahrenstoffe sind in Ausführungsbeispielen möglich.

Das Funkelement und/oder die Steuerung sind in einem Ausführungsbeispiel in der Bildaufnahmevorrichtung und/oder der Vorrichtung zur Gestenerkennung umfasst. In einem Ausführungsbeispiel wird daher bevorzugt ein Smartphone oder eine Digitalkamera mit Funkelement als Bildaufnahmevorrichtung genutzt, da hierdurch bereits in der Bildaufnahmevorrichtung zumindest ein Funkelement sowie eine Kamera zur Bilderzeugung umfasst sind. Zudem kann auf einem Smartphone die Steuerung beispielsweise in Form einer softwarebasierten Lösung, insbesondere als App, integriert werden. Vorzugsweise kann die Steuerung in Form einer softwarebasierten Lösung dabei zur Ausführung Elemente der Bildaufnahmevorrichtung, wie bspw. einen Prozessor, einen internen Speicher, Funkelemente der Bildaufnahmevorrichtung, insbesondere des Smartphone oder der Digitalkamera nutzen. Die Steuerung kann in einem weiteren Ausführungsbeispiel als softwarebasierte Lösung in der Vorrichtung zur Gestensteuerung oder dem Auslösemechanismus implementiert werden.

In einem typischen Ausführungsbeispiel kommunizieren die Vorrichtung zur Gestenerkennung und die Bildaufnahmevorrichtung über eine Funkverbindung. Diese kann sowohl durch das Funkelement zur Datenübertragung erzeugt werden, aber auch durch ein weiteres Funkelement, welches in der Bildaufnahmevorrichtung und/oder der Vorrichtung zur Gestenerkennung integriert ist. Über die Kommunikation zwischen der Bildaufnahmevorrichtung und der Vorrichtung zur Gestenerkennung wird ermöglicht, dass die Bildaufnahmevorrichtung über die Vorrichtung zur Gestenerkennung steuerbar ist. Somit wird ermöglicht auf einfache Weise Bilder und/oder Bildsequenzen der Einsatzstelle zu erstellen oder eine Messung der Sensorvorrichtungen auszulösen, ohne dass dabei ein Auslöser betätigt werden muss. Folglich können in einem Ausführungsbeispiel mit dem erfindungsgemässen System berührungslos Fotos erstellt werden. In einem weiteren Ausführungsbeispiel wird das erfindungsgemässe System durch eine Berührung eines Auslösemechanismus aktiviert, d.h. ein Bild oder eine Bildsequenz erzeugt oder eine Messung der Sensorvorrichtungen ausgelöst. Zur einfacheren Bedienung kann die Bildaufnahmevorrichtung mit dem Gehäuse auch an einem Halteelement, bspw. einem Telekopstick angebracht werden. In weiteren Ausführungsbeispielen kann das erfindungsgemässe System auch an autonomen oder ferngesteuerten Drohnen, Robotern oder ähnlichem befestigt sein.

In einem weiteren Ausführungsbeispiel kann bei dem erfindungsgemässen System auf ein Gehäuse verzichtet werden. In einem solchen Fall weist die Bildaufnahmevorrichtung als solches eine ausreichende bauliche Ausgestaltung und vorzugsweise auch Zertifizierung auf, die einen Einsatz in der gewünschten Zone eines möglichen explosionsgefährdeten Bereichs etwa bei einem Gefahrguteinsatz ermöglicht.

Das System ist weiterhin so ausgestaltet, dass eine Dekontamination nach einem Gefahrguteinsatz einfach ermöglicht wird. Vorzugsweise kann die Dekontamination des Systems, insbesondere des Gehäuses und/oder der Bildaufnahmevorrichtung, im Rahmen der Dekontamination des Erkundungstrupps erfolgen.

In einem weiteren Ausführungsbeispiel umfasst das System eine "Mayday-Funktion". Dabei kann bspw. durch ein langes Drücken des Auslösemechanismus oder eine Erkennung einer bestimmten Bewegungsreihenfolge durch den Auslösemechanismus, insbesondere der Vorrichtung zur Gestenerkennung ein Notsignal an eine Einsatzleitung gesendet werden, durch das signalisiert wird, dass der vorgegangene Trupp sich in Gefahr befindet und sich nicht mehr selbst retten kann und Hilfe durch weitere Trupps benötigt.

Zudem kann zur Anzeige von Gefahren, die bspw. erst durch Auswertung der Messwerte durch die Einsatzleitung festgestellt werden, ein Funkkanal zur Übertragung von Informationen geblockt werden. Dadurch kann die Einsatzleitung wichtige Informationen zu Gefahren, bspw. dass der Trupp den Gefahrenbereich sofort erlassen muss, über das System an die Bildaufnahmevorrichtung senden, die dieses Information als Nachricht sofort auf einem Display anzeigt und eine weitere Betätigung vorzugsweise erst nach einer Bestätigung der Information durch den Trupp zulässt. Weiterhin kann der Trupp in Ausführungsbeispielen durch die Bildaufnahmevorrichtung bspw. durch ein Tonsignal oder durch die Auslösevorrichtung oder die Vorrichtung zur Gestenerkennung, bspw. durch eine anhaltende Vibration, auf die Information aufmerksam gemacht werden.

Weiterhin kann die Bildaufnahmevorrichtung oder das Gehäuse neben einer integrierten Lichtquelle, bspw. einem Blitzlicht, auch eine weitere Lichtquelle umfassen oder es kann eine weitere Lichtquelle angebracht werden, sodass eine bessere Ausleuchtung erreicht werden kann und zudem der vorgehende Trupp eine weitere Lichtquelle zur Ausleuchtung mit sich führt, wodurch der Trupp Gefahrenstellen ggf. frühzeitiger erkennen kann und auch von anderen Trupps besser gesehen/erkannt werden kann.

Die Steuerung des Systems kann in einem Ausführungsbeispiel ermöglichen, dass die Bildaufnahmevorrichtung bei der Erkennung bestimmter Formen oder Kennziffern automatisch ein Bild erzeugt um dieses an die Einsatzleitung zu senden. Beispielsweise kann es sich hierbei um Gefahrenzettel, eine Gefahrentafel, auf der neben einer Gefahrenklasse eine UN-Nummer eines Gefahrgutstoffes angegeben ist oder einen sogenannten Gefahrendiamanten handeln.

In einem weiteren Ausführungsbeispiel kann die Bildaufnahmevorrichtung und/oder die weiteren Sensorvorrichtungen durch einen ferngesteuerten Zugriff über die Funkverbindung von berechtigten Nutzern, wie bspw. der Einsatzleitung übernommen werden, sodass die Einsatzleitung bspw. einen Live-Stream durch die Bildaufnahmevorrichtung oder eine Messreihe durch die Sensorvorrichtungen starten kann.

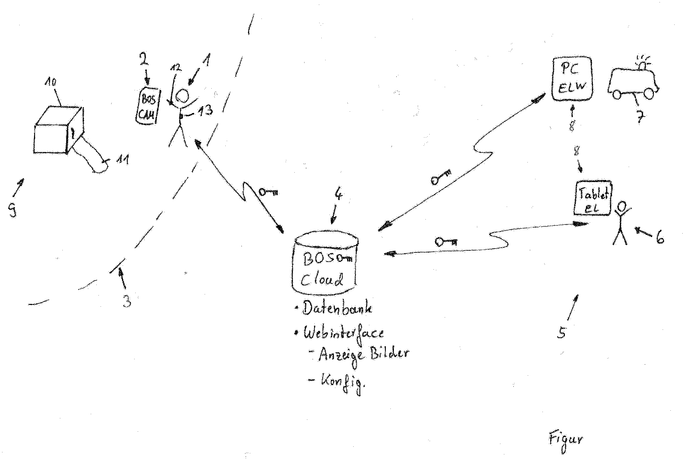

Das erfindungsgemässe Verfahren zur Erzeugung von Bildern und/oder Bildsequenzen und/oder der Feststellung weiterer relevanter Daten für eine Lagefeststellung bei Gefahrguteinsätzen wird im Folgenden mit Hilfe der einzigen Figur beispielhaft erläutert, die schematisch die Situation bei einem Gefahrguteinsatz darstellt.

In der Figur ist ein Erkundungstrupp 1 dargestellt, der sich innerhalb einer Schutzzone 3 befindet. Die Schutzzone 3 weist einen durch Vorschriften vorgegeben Abstand um eine Unglücksstelle 9 auf, in der ein Gefahrgutbehälter 10 leck geschlagen ist und Gefahrgut 11 austritt.

Da bei einem Gefahrguteinsatz zunächst im Regelfall eine unbekannte Lage vorliegt und meist nicht bekannt ist um was für Stoffe es sich an der Unglücksstelle handelt, ist der Erkundungstrupp 1 mit einer persönlichen Schutzausrüstung, die zumindest eine umluftunabhängige Atemluftversorgung und einen Chemikalienschutzanzug (CSA) aufweist, ausgerüstet.

Im gezeigten Ausführungsbeispiel ist der Erkundungstrupp 1 weiterhin mit einem erfindungsgemässen System zur Lagefeststellung bei Gefahrguteinsätzen ausgerüstet. Hierfür trägt eine Person des Erkundungstrupps 1 eine Vorrichtung zur Gestenerkennung, beispielsweise ein Gestenerkennungsarmband 12 oder einen Auslösemechanismus 13 als Auslösevorrichtung. Weiterhin trägt der Erkundungstrupp 1 eine Erkundungskamera 2 mit sich, die mit dem Gestenerkennungsarmband 12 oder dem Auslösemechanismus 13 in Wirkverbindung steht. Bspw. kommuniziert die Erkundungskamera 2 mit dem Gestenerkennungsarmband 12 oder dem Auslösemechanismus 13 über eine Bluetooth-Verbindung. Die Erkundungskamera 2 umfasst beispielsweise ein Smartphone, das in einem Gehäuse untergebracht ist um einen Einsatz in einer Ex-0-Zone zu ermöglichen. Weiterhin umfasst das Smartphone eine Steuerung, die in Form einer softwarebasierten Lösung auf die technischen Ressourcen des Smartphones für die Steuerung des Systems zurückgreift.

Um Bilder und/oder Bildsequenzen von der Unglücksstelle 9 und insbesondere dem beschädigten Gefahrgutbehälter 10 innerhalb der Schutzzone 3 zu erstellen, wird durch den Erkundungstrupp eine vorbestimmte Bewegung, bspw. ein Verdrehen des Unterarms, eine Handgeste oder ähnliches ausgeführt oder der Auslösemechanismus bspw. durch eine Tastberührung betätigt. Die Bewegung oder Tastberührung wird durch das Gestenerkennungsarmband 12 oder den Auslösemechanismus 13 erkannt, und es wird ein Signal an die Steuerung des Systems zur Lagefeststellung bei Gefahrguteinsätzen gesendet. Die Steuerung überprüft ob es sich bei der Bewegung oder die Tastberührung, die von dem Gestenerkennungsarmband 12 oder dem Auslösemechanismus erkannt wurde, um eine vorbestimmte Bewegung handelt. Stellt die Steuerung fest, dass es sich um eine vorbestimmte Bewegung handelt wird ein Auslösemechanismus der Bildaufnahmevorrichtung der Erkundungskamera 2 ausgelöst oder es werden durch Aktivierung von Sensorvorrichtungen des Systems Messwerte erzeugt. Weiterhin besteht auch die Möglichkeit dass durch die Erkundungskamera weitere für die Einsatzleitung 5 relevante Daten erfasst werden, bspw. über an dem Gehäuse angebrachte Sensorelemente. Durch den Begriff "Daten" werden im Folgenden sämtliche durch das System erfasste Bilder, Bildsequenzen Live-Bild-und Tondaten und/oder Messwerte umfasst.

Sobald die Daten, bspw. die Bilder und/oder Bildsequenzen erstellt sind und/oder schon während der Erstellung wird durch die Steuerung des Systems zur Lagefeststellung bei Gefahrguteinsätzen überprüft, ob eine ausreichend stabile Funk-/Datenverbindung vorliegt um die gewonnenen Daten an eine Datenbank, bspw. eine Cloud 4 zu übertragen. Stellt die Steuerung des Systems zur Lagefeststellung bei Gefahrguteinsätzen ein Vorhandensein einer ausreichend stabilen Funk-/Datenverbindung fest, werden die gewonnenen Daten an die Datenbank in der Cloud 4 und/oder an Empfangsgeräte 8 der Einsatzleitung übertragen. Sofern eine ausreichend stabile Funk-/Datenverbindung vorliegt, soll insbesondere auch die Möglichkeit der Echtzeitdarstellung und -übertragung von Bildern oder Filmsequenzen oder der Messwerte der Sensorvorrichtungen durch das erfindungsgemässe System ermöglicht werden. Die Daten werden vor der Übertragung verschlüsselt um einen Zugriff unbefugter Personen auf die Daten zu verhindern.

Die Daten können durch die Speicherung in der Datenbank der Cloud 4 vorzugsweise auch von weiteren Rettungsorganisationen, externen Beratern und/oder einer Rettungsleitstelle abgerufen werden. Der Umfang des Zugriffs kann hierfür bspw. über ein Webinterface, das in der Cloud 4 umfasst ist, konfiguriert werden und für verschiedene Empfänger durch die Einsatzleitung freigegeben werden.

Für den Fall, dass keine ausreichende Datenverbindung an der Unglücksstelle vorhanden ist, besteht die Möglichkeit die Daten aus einem Speicher der Erkundungskamera 2 direkt an ein Empfangsgerät 8 des Einsatzleiters 6 oder an ein Empfangsgerät 8 des Einsatzleitwagens 7 zu übertragen. Dies kann bspw. bei Gefahrgutunfällen in Gebäuden auftreten, da hier der Empfang durch Gebäudewände oder dergleichen gestört sein kann.

In einem Ausführungsbeispiel begibt sich der Erkundungstrupp 1 hierfür an den Rand der Schutzzone 3 um die Daten bspw. über Bluetooth an das Empfangsgerät 8 des Einsatzleiters 6 und/oder über ein an der Einsatzstelle aufgebautes Einsatzstellen-WLAN-Netzwerk an das Empfangsgerät 8 des Einsatzleitwagens zu übertragen.

Obwohl das System und das Verfahren für das Beispiel eines Gefahrguteinsatzes einer Rettungsorganisation beschrieben wurde ist es für den Fachmann selbstverständlich, dass das System und das Verfahren auch im industriellen Bereich genutzt bzw. angewendet werden können. Insbesondere können das erfindungsgemässe System sowie das erfindungsgemässe Verfahren bei der Wartung und Instandsetzung oder der Errichtung von industriellen Anlagen im Bereich der chemischen Industrie, der Erdölverarbeitenden Industrie oder Industrien, bei denen Mitarbeiter mit gefährlichen Gaskonzentrationen in Kontakt kommen können, genutzt werden.

In einem solchen Nutzungsbeispiel tritt an Stelle des Erkundungstrupp ein Wartungs- oder Installationstrupp, der in einem gegebenenfalls mit Gefahrgutstoffen belasteten Bereich vorgeht und arbeitet und an Stelle der Einsatzleitung und der Rettungsleitstelle ein Vorgesetzter, ein unterstützender Techniker/Ingenieur oder eine Leitstelle des Industriebetriebs, die ein Vorgehen des Wartungstrupps überwachen und diesen bei seiner Arbeit aufgrund der genauen Daten unterstützen können.

**Bezugszeichenliste**

| | | | | | |
|---|---|---|---|---|---|
| 1 | Erkundungstrupp | 34 | | | |
| 2 | Erkundungskamera | 35 | | | |
| 3 | Schutzzone | 36 | | | |
| 4 | Cloud | 37 | | | |
| 5 | Einsatzleitung | 38 | | | |
| 6 | Einsatzleiter | 39 | | | |
| 7 | Einsatzleitwagen | 40 | | | |
| 8 | Empfangsgerät | 41 | | | |
| 9 | Unglücksstelle | 42 | | | |
| 10 | Gefahrgutbehälter | 43 | | | |
| 11 | Gefahrgut | 44 | | | |
| 12 | Gestenerkennungsarmband | 45 | | | |
| 13 | Auslösemechanismus | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. System zur Lagefeststellung bei Gefahrguteinsätzen, umfassend:
- ein Gehäuse,
- eine Vorrichtung zur Gestenerkennung oder eine Auslösevorrichtung,
- eine Bildaufnahmevorrichtung zur Erzeugung von Bildern und/oder Bildsequenzen, wobei die Bildaufnahmevorrichtung vorzugsweise ein Smartphone oder eine Digitalkamera ist,
- ein Funkelement, und
- eine Steuerung, wobei die Steuerung zumindest für die Kopplung der Gestenerkennung oder der Auslösevorrichtung mit der Bildaufnahmevorrichtung und für eine Übertragung von Bildern und/oder Bildsequenzen an eine Datenbank nutzbar ist.

2. System nach Anspruch 1, **dadurch gekennzeichnet, dass** das Gehäuse und die Bildaufnahmevorrichtung einstückig ausgebildet sind.

3. System nach Anspruch 1 oder 2, **dadurch gekennzeichnet, dass** die Gestenerkennung oder die Auslösevorrichtung und das Gehäuse und/oder die Bildaufnahmevorrichtung einstückig ausgebildet sind.

4. System nach einem der vorherigen Ansprüche **gekennzeichnet durch** eine EX-0-Zertifizierung für den Einsatz in explosionsgefährdeten Bereichen der Zone 0.

5. System nach einem der vorherigen Ansprüche, **dadurch gekennzeichnet, dass** die Vorrichtung zur Gestenerkennung ein Gestenerkennungsarmband ist oder in einer Atemschutzmaske integriert ist.

6. System nach einem der vorherigen Ansprüche, **dadurch gekennzeichnet, dass** die Steuerung und/oder das Funkelement in der Bildaufnahmevorrichtung und/oder der Vorrichtung zur Gestensteuerung oder der Auslösevorrichtung integriert sind.

7. System nach einem der vorherigen Ansprüche, **dadurch gekennzeichnet, dass** die Steuerung durch eine Software/App in der Bildaufnahmevorrichtung und/oder der Vorrichtung zur Gestenerkennung implementierbar ist.

8. System nach einem der vorherigen Ansprüche, **dadurch gekennzeichnet, dass** die Bildaufnahmevorrichtung über die Vorrichtung zur Gestenerkennung oder die Auslösevorrichtung steuerbar ist.

9. System nach einem der vorherigen Ansprüche, **dadurch gekennzeichnet, dass** das Funkelement ein Sende- und Empfangselement zur Übermittlung von Daten via Bluetooth und/oder Wireless-LAN und/oder über ein GSM-Netz umfasst.

10. System nach einem der vorherigen Ansprüche **gekennzeichnet durch** zumindest eine Sensorvorrichtung zur Erzeugung von Messwerten.

11. System nach Anspruch 10, **dadurch gekennzeichnet, dass** die Sensorvorrichtung ein Gassensor oder ein Sensor zur Feststellung einer unteren Explosionsgrenze eines Gasgemisches oder einer Staubwolke oder ein Sensor zur Feststellung radioaktiver Strahlung ist.

12. Verfahren zur Erzeugung von Daten, Bildern, Messwerten, Bildsequenzen und/oder Liveübertragungen bei Gefahrguteinsätzen, **gekennzeichnet durch** eine Erzeugung eines Bildes und/oder einer Bildsequenz und/oder Feststellung weiterer Daten **durch** einen Erkundungstrupp, wobei die Bilder und/oder Bildsequenzen und/oder Daten mittels einem System zur Lagefeststellung nach zumindest einem der Ansprüche 1 bis 11 erzeugt und/oder erfasst werden, wobei **durch** die Vorrichtung zur Gestenerkennung oder die Auslösevorrichtung eine Bewegung erkannt wird und ein Signal an die Steuerung gesendet wird, wobei die Steuerung überprüft ob es sich um eine vorbestimmte Bewegung handelt und bei Vorhandensein eines Signals das der vorbestimmten Bewegung entspricht, einen Auslösemechanismus der Bildaufnahmevorrichtung auslöst und/oder weitere zu erfassende Daten ermittelt.

13. Verfahren nach Anspruch 12, **dadurch gekennzeichnet, dass** die Steuerung überprüft ob eine ausreichend stabile Funkverbindung/Datenverbindung vorliegt und bei Vorhandensein einer ausreichenden Datenverbindung die erzeugten Bilder und/oder Bildsequenzen und/oder Daten an eine Datenbank und/oder ein Empfangsgerät, welches bei einer Einsatzleitung positioniert ist, übermittelt, wobei die Übertragung verschlüsselt erfolgt

14. Verfahren nach Anspruch 13, **dadurch gekennzeichnet, dass** die Daten von der Datenbank an ein Empfangsgerät bei der Einsatzleitung und/oder weitere Empfangsgeräte übermittelt werden und/oder von der Einsatzleitung und/oder weitere Empfangsgeräte über eine verschlüsselte Verbindung abgerufen werden können.
